# EUROPEAN PATENT APPLICATION

(11) **EP 3 170 999 A1**
(43) Date of publication of application: **24.05.2017**
(21) Application number: 15821629.1
(22) Date of filing: 16.06.2015
(51) Int. Cl.: F02B 39/00, F02B 37/10, H02K 5/173, H02K 5/24

(54) **ELECTRICALLY DRIVEN SUPERCHARGER**

(30) Priority: 14.07.2014 JP 2014144161
(71) Applicant: Kabushiki Kaisha Toyota Jidoshokki, Kariya-shi, Aichi 448-8671 (JP)
(72) Inventor: OSHITA, Makio, Kariya-shi Aichi 448-8671 (JP); YAMAMICHI, Toshihiro, Kariya-shi Aichi 448-8671 (JP); FUJIKI, Yutaka, Kariya-shi Aichi 448-8671 (JP)
(74) Representative: TBK
(86) International application number: PCT/JP2015/067313
(87) International publication number: WO 2016/009771

(57) **Abstract**

An electric supercharger having an impeller that rotates in order to supercharge a fluid includes: a housing; a shaft supported to be capable of rotating relative to the housing via a first bearing and a second bearing; a first bearing sleeve and a second bearing sleeve fixed to the housing in order to support the first bearing and the second bearing, respectively; and a first rubber sheet and a second rubber sheet provided between the housing and the first bearing sleeve and the second bearing sleeve, respectively, in an axial direction X. With this electric supercharger configured in the abovementioned manner, elastic members can be incorporated easily between a housing and respective bearing sleeves, and an offset load can be prevented from acting on a pair of bearings supported by the respective bearing sleeves.

## Description

### Technical Field

This invention relates to an electric supercharger.

### Background Art

Patent Literature 1 discloses an electric supercharger in which a fluid is supercharged by driving an impeller to rotate using a rotating electric machine such as an electric motor. In the electric supercharger of PTL 1, as shown in Fig. 1 thereof, a pair of substantially cylindrical bearing sleeves incorporated into a housing rotatably support a rotary shaft via bearings. The pair of bearings and the pair of bearing sleeves are disposed on either side of an electric motor attached to the rotary shaft. As shown in Figs. 2 and 4 of PTL 1, elastic 0-rings or elastic dampers are provided between the housing and respective outer peripheries of the bearing sleeves, in a radial direction of the rotary shaft, to reduce vibration of the electric supercharger.

### Citation List

### Patent Literature

Patent Literature 1: Japanese Patent Application Publication No. 2013-24059

### Summary of Invention

### Technical Problem

However, when elastic members such as elastic 0-rings or elastic dampers are provided on the outer peripheries of the bearing sleeves, the precision with which the pair of bearings are positioned in the radial direction deteriorates. In other words, positions of respective central axes of the pair of bearings may deviate from each other. When the positions of the central axes of the bearings deviate from each other, an offset load is exerted on the bearings while supporting the rotary shaft.

Further, when elastic members are provided on the outer peripheries of the bearing sleeves, grooves for attaching the elastic members must be formed on an inner peripheral surface side of the housing opposite respective outer peripheral surfaces of the bearing sleeves. As a result, processing implemented on the housing in order to incorporate the elastic members becomes complicated.

This invention has been designed to solve the problems described above, and an object thereof is to provide an electric supercharger in which elastic members can be incorporated easily between a housing and respective bearing sleeves, and an offset load can be prevented from acting on a pair of bearings supported by the respective bearing sleeves.

### Solution to Problem

To solve the problems described above, an electric supercharger according to this invention has an impeller that rotates in order to supercharge a fluid, and includes a housing, a rotary shaft connected to the impeller, a pair of bearings that support the rotary shaft so as to be capable of rotating relative to the housing, a pair of bearing sleeves fixed to the housing in order to support the pair of bearings respectively, and an elastic member provided between the housing and at least one of the bearing sleeves in an axial direction of the rotary shaft.

Further, the elastic member of the electric supercharger according to this invention may be a rubber sheet, and the rubber sheet may cut off contact between the bearing sleeves and the housing in the axial direction.

Furthermore, concavo-convex irregularities may be formed in a contact surface of the rubber sheet that contacts the bearing sleeve.

Moreover, the elastic member of the electric supercharger may be an 0-ring.

### Advantageous Effects of Invention

With the electric supercharger according to this invention, elastic members can be incorporated easily between the housing and the respective bearing sleeves, and an offset load can be prevented from acting on the pair of bearings supported by the bearing sleeves.

### Brief Description of Drawings

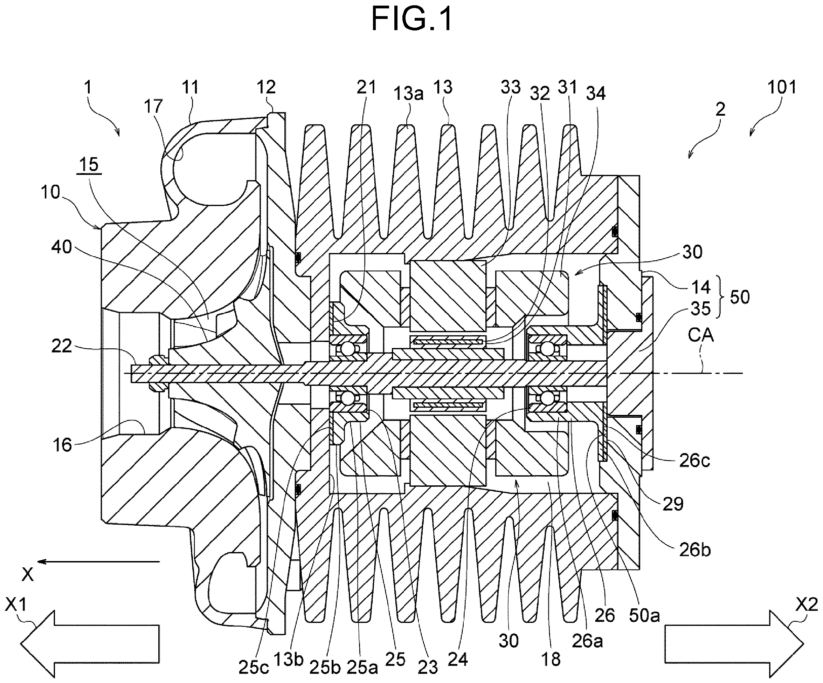

Fig. 1 is a sectional view showing a configuration of an electric supercharger according to a first embodiment of this invention.

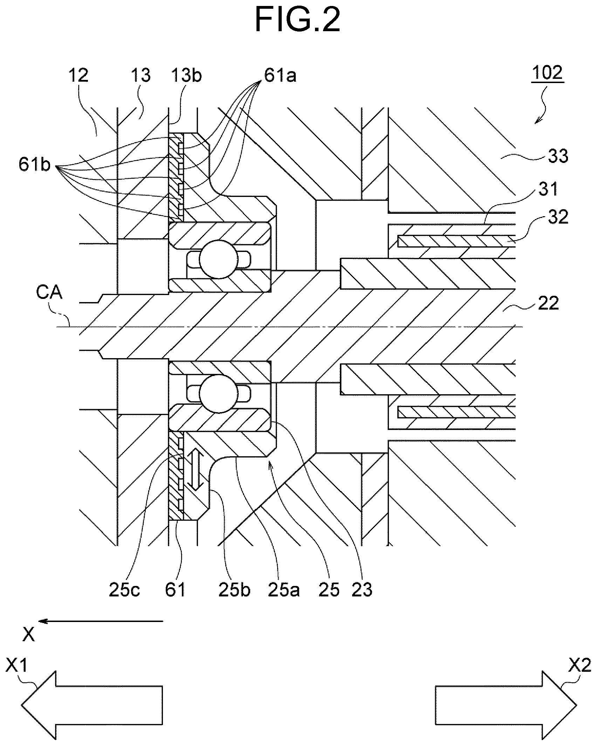

Fig. 2 is an enlarged partial sectional view showing the vicinity of a first bearing sleeve of an electric supercharger according to a second embodiment of this invention.

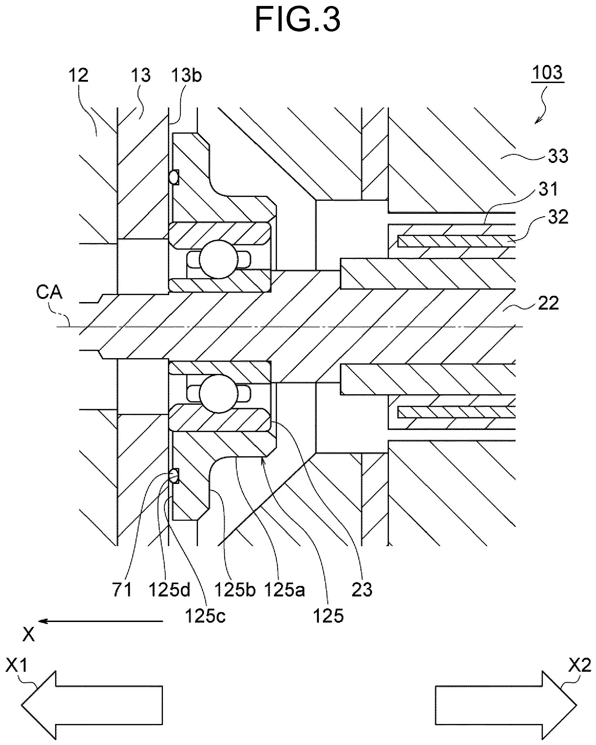

Fig. 3 is an enlarged partial sectional view showing the vicinity of a third bearing sleeve of an electric supercharger according to a third embodiment of this invention.

### Description of Embodiments

Embodiments of this invention will be described below on the basis of the attached drawings.

### First Embodiment

First, the configuration of an electric supercharger 101 according to a first embodiment of this invention will be described.

Referring to Fig. 1, the electric supercharger 101 is constituted by a supercharging unit 1 for supercharging a fluid taken therein, and a driving unit 2 for driving the supercharging unit 1 using an electric motor 30 serving as a rotating electric machine. Note that in this embodiment, the fluid supercharged by the electric supercharger 101 is assumed to be air.

The supercharging unit 1 includes an impeller 40 that rotates in order to supercharge the intake air, and a shaft 22 that is connected to the impeller 40 at one end so as to be capable of rotating integrally therewith. Further, the impeller 40 is covered by a metal compressor cover 11. Furthermore, a substantially disc-shaped metal seal plate 12 is attached to the compressor cover 11. An impeller chamber 15 is formed between the compressor cover 11 and the seal plate 12, and the impeller 40 is housed rotatably in the impeller chamber 15. The shaft 22 connected to the impeller 40 penetrates the seal plate 12 from the interior of the compressor cover 11 so as to extend to the driving unit 2. In the following description, an extension direction of the shaft 22 is set as an axial direction X. Further, the side on which the shaft 22 is connected to the impeller 40 is set as an X axis positive direction X1, and the side on which the shaft 22 extends toward the driving unit 2 is set as an X axis negative direction X2.

Note that the shaft 22 constitutes a rotary shaft.

Furthermore, an intake passage 16 and an annular discharge passage 17 are formed in the compressor cover 11, the intake passage 16 extending in the axial direction X of the shaft 22 from the impeller chamber 15 so as to open onto the outside, and the annular discharge passage 17 communicating with the impeller chamber 15 and extending around the periphery of the impeller 40 so as to open onto the outside.

The driving unit 2 includes a substantially cylindrical metal motor case 13 having an open end in the X axis negative direction X2, a substantially flat donut-shaped end plate 14 that closes the opening of the motor case 13, and a rear end member 35 that is fitted to a central opening in the end plate 14. A space surrounded by the motor case 13, the end plate 14, and the rear end member 35 constitutes a motor chamber 18, and the electric motor 30 is housed in the motor chamber 18. Furthermore, a plurality of heat dissipating fins 13a are formed to project from an outer peripheral surface of the motor case 13 in order to improve the efficiency with which the motor case 13 is cooled by peripheral air.

Here, the compressor cover 11, the seal plate 12, the motor case 13, the end plate 14, and the rear end member 35 together constitute a housing 10 of the electric supercharger 101. Further, the end plate 14 and the rear end member 35 together constitute a lid body 50.

In the motor chamber 18, a substantially cylindrical rotor core 31 is provided on an outer peripheral surface of the shaft 22 so as to rotate integrally with the shaft 22. Permanent magnets 32 are embedded in the rotor core 31 around an outer peripheral surface thereof. Furthermore, a substantially cylindrical stator core 33 is provided fixedly on an inner peripheral surface of the motor case 13 facing the motor chamber 18 so as to surround the outer periphery of the rotor core 31. Moreover, coils 34 project from respective ends of the stator core 33.

The shaft 22, the rotor core 31, the permanent magnets 32, the stator core 33, and the coils 34 together constitute the electric motor 30. The shaft 22 serves as the rotary shaft of both the impeller 40 and the electric motor 30.

The shaft 22 is supported to be capable of rotating relative to the housing 10 by a first bearing 23 and a second bearing 24 constituting a pair of bearings provided in the motor chamber 18. The first bearing 23 supports the shaft 22 in a position on the X axis positive direction X1 side of the electric motor 30, while the second bearing 24 supports the shaft 22 in a position on the X axis negative direction X2 side of the electric motor 30. The first bearing 23 and the second bearing 24 both include an outer race and an inner race, the outer race and the inner race being capable of rotating relative to each other. Note that the first bearing 23 and the second bearing 24 are ball bearings.

A first bearing sleeve 25 for supporting the first bearing 23 is attached fixedly to an inner wall 13b of the motor case 13 facing the X axis positive direction X1 side of the motor chamber 18. The first bearing sleeve 25 includes a cylindrical portion 25a extending in the axial direction X, and a flange portion 25b formed integrally with an X axis positive direction X1 side end portion of the cylindrical portion 25a. The first bearing 23 is supported by an inner peripheral surface of the cylindrical portion 25a of the first bearing sleeve 25. Further, a substantially annular, thin plate-shaped first rubber sheet 21 having a rectangular cross-section is provided between an X axis positive direction X1 side bottom surface 25c of the flange portion 25b of the first bearing sleeve 25 and the inner wall 13b of the motor case 13. In other words, the first rubber sheet 21 is provided between the motor case 13 and the first bearing sleeve 25 in the axial direction X. The first bearing sleeve 25 and the first rubber sheet 21 are fixed to the motor case 13 by bolts (not shown). Note that since the first rubber sheet 21 is sandwiched between the bottom surface 25c of the flange portion 25b of the first bearing sleeve 25 and the inner wall 13b of the motor case 13, the bottom surface 25c and the inner wall 13b are separated from each other. In other words, the first rubber sheet 21 cuts off contact between the first bearing sleeve 25 and the motor case 13 in the axial direction X.

Here, the first rubber sheet 21 constitutes an elastic member, and functions as a damper having a vibration damping function.

Meanwhile, a second bearing sleeve 26 for supporting the second bearing 24 is attached fixedly to an inner wall 50a of the lid body 50 facing the X axis negative direction X2 side of the motor chamber 18. The second bearing sleeve 26 includes a cylindrical portion 26a extending in the axial direction X, and a flange portion 26b formed integrally with an X axis negative direction X2 side end portion of the cylindrical portion 26a. The second bearing 24 is supported by an inner peripheral surface of the cylindrical portion 26a of the second bearing sleeve 26. Further, a substantially annular, thin plate-shaped second rubber sheet 29 having a rectangular cross-section is provided between an X axis negative direction X2 side bottom surface 26c of the flange portion 26b of the second bearing sleeve 26 and the inner wall 50a of the lid body 50. In other words, the second rubber sheet 29 is provided between the lid body 50 and the second bearing sleeve 26 in the axial direction X. The second bearing sleeve 26 and the second rubber sheet 29 are fixed to the lid body 50 by bolts (not shown). Moreover, the second rubber sheet 29, similarly to the first rubber sheet 21, cuts off contact between the second bearing sleeve 26 and the lid body 50 in the axial direction X.

Here, the second rubber sheet 29 constitutes the elastic member, and functions as a damper, similarly to the first rubber sheet 21.

Next, an operation of the electric supercharger 101 according to the first embodiment of this invention will be described.

Referring to Fig. 1, in the electric supercharger 101, when power is applied to the coils 34 of the electric motor 30 from a power supply, not shown in the drawing, the rotor core 31 is driven to rotate by a rotating magnetic field generated in the coils 34. As a result, the shaft 22 and the impeller 40 are driven to rotate about a central axis CA at high speed. In accordance with this rotation, the impeller 40 compresses, or in other words supercharges, air taken in from the intake passage 16, and pumps the supercharged air to the discharge passage 17.

Hence, in the electric supercharger 101 according to the first embodiment, the first rubber sheet 21 is provided between the motor case 13 and the first bearing sleeve 25. Further, the second rubber sheet 29 is provided between the lid body 50 and the second bearing sleeve 26. The first rubber sheet 21 and the second rubber sheet 29 function as elastic members so as to damp vibration, and therefore vibration generated in the shaft 22 when driven to rotate by the electric motor 30 is reduced.

Furthermore, either the first rubber sheet 21 or the second rubber sheet 29 is provided between the housing 10 and either the first bearing sleeve 25 or the second bearing sleeve 26 in the axial direction X. Here, in the conventional electric supercharger, the elastic member is provided on the radial direction outer side of the bearing sleeve, and therefore a groove for attaching the elastic member must be formed on the inner peripheral surface side of the housing opposite the outer peripheral surface of the bearing sleeve. In the electric supercharger 101 according to the first embodiment, however, it is sufficient to sandwich either the first rubber sheet 21 or the second rubber sheet 29 between the housing 10 and either the first bearing sleeve 25 or the second bearing sleeve 26 and fasten the sandwiched members by bolts. Therefore, the first rubber sheet 21 or the second rubber sheet 29 can be incorporated easily between the housing 10 and either the first bearing sleeve 25 or the second bearing sleeve 26.

Moreover, when a damper such as an 0-ring is provided on the radial direction outer side of the first bearing sleeve 25 or the second bearing sleeve 26, a deviation occurs between the position of the central axis of the first bearing 23 and the position of the central axis of the second bearing 24, and as a result, an offset load may be exerted on the first bearing 23 and the second bearing 24. With the electric supercharger 101 according to the first embodiment, however, the position of the central axis of the first bearing 23 and the position of the central axis of the second bearing 24 can be aligned with each other with a similar degree of precision to that obtained in a case where a damper is not provided on the radial direction outer side of the first bearing sleeve 25 or the second bearing sleeve 26. In other words, the position of the central axis of the first bearing 23 and the position of the central axis of the second bearing 24 are aligned with the position of the central axis CA of the shaft 22. As a result, an offset load is prevented from acting on the first bearing 23 and the second bearing 24.

Further, the first rubber sheet 21 cuts off contact between the first bearing sleeve 25 and the motor case 13 of the housing 10 in the axial direction X. Furthermore, the second rubber sheet 29, similarly to the first rubber sheet 21, cuts off contact between the second bearing sleeve 26 and the lid body 50 of the housing 10 in the axial direction X. Accordingly, a situation in which the vibration of the shaft 22 is transmitted to the housing 10 via the first bearing sleeve 25 and the second bearing sleeve 26 is prevented from occurring, and as a result, an overall reduction in vibration in the electric supercharger 101 is achieved.

### Second Embodiment

Fig. 2 shows a configuration of an electric supercharger 102 according to a second embodiment of this invention. In the electric supercharger 102, the first rubber sheet 21 of the electric supercharger 101 according to the first embodiment is replaced with a third rubber sheet 61 shown in Fig. 2. Note that identical numerals to the reference numerals used in Fig. 1 denote identical or similar constituent elements, and detailed description thereof has been omitted.

The third rubber sheet 61, which is provided between the bottom surface 25c of the flange portion 25b of the first bearing sleeve 25 and the inner wall 13b of the motor case 13, has a substantially annular thin plate shape, similarly to the first rubber sheet 21 of the electric supercharger 101. Further, four annular grooves 61a disposed concentrically about the central axis CA are formed in an X axis negative direction X2 side surface 61c of the third rubber sheet 61, or in other words a contact surface 61c that contacts the bottom surface 25c of the first bearing sleeve 25. Furthermore, parts of the X axis negative direction X2 side surface 61c of the third rubber sheet 61 in which the annular grooves 61a are not formed constitute five projecting portions 61b. The projecting portions 61b are disposed alternately with the annular grooves 61a. In other words, concavo-convex irregularities are formed in the contact surface 61c by which the third rubber sheet 61 contacts the first bearing sleeve 25.

The third rubber sheet 61 constitutes the elastic member.

Hence, in the electric supercharger 102 according to the second embodiment, the third rubber sheet 61 is provided between the motor case 13 and the first bearing sleeve 25. Similarly to the electric supercharger 101 according to the first embodiment, therefore, vibration generated in the shaft 22 when driven to rotate by the electric motor 30 is reduced. Moreover, the third rubber sheet 61 can be incorporated easily by sandwiching the third rubber sheet 61 between the housing 10 and the first bearing sleeve 25 in the axial direction X. Furthermore, a damper does not have to be provided on the radial direction outer side of the first bearing sleeve 25, and therefore an offset load is prevented from acting on the first bearing 23 and the second bearing 24. Moreover, the third rubber sheet 61 cuts off contact between the first bearing sleeve 25 and the motor case 13 in the axial direction X, and therefore the vibration of the shaft 22 is prevented from being transmitted to the housing 10. As a result, an overall reduction in vibration in the electric supercharger 102 is achieved.

Furthermore, in the third rubber sheet 61, concavo-convex irregularities are formed in the contact surface 61c that contacts the first bearing sleeve 25. Therefore, when the shaft 22 is driven to rotate, the projecting portions 61b of the third rubber sheet 61 deform in the radial direction, as shown by arrows, in response to vibration of the first bearing sleeve 25. As a result, the third rubber sheet 61 can damp not only vibration in the axial direction X, but also vibration in the radial direction of the shaft 22.

Further, since vibration is damped by the deformation of the projecting portions 61b, vibration in the electric supercharger 102 can be damped sufficiently even when a hard rubber material is used for the third rubber sheet 61.

Note that in the second embodiment, concavo-convex irregularities similar to those of the third rubber sheet 61 may also be formed on the second rubber sheet 29 provided between the second bearing sleeve 26 and the lid body 50, or more specifically on a contact surface thereof that contacts the second bearing sleeve 26.

Furthermore, the concavo-convex irregularities formed on the third rubber sheet 61 may be constituted by a plurality of hemispherical projecting portions formed on the contact surface 61c that contacts the first bearing sleeve 25.

### Third Embodiment

Fig. 3 shows a configuration of an electric supercharger 103 according to a third embodiment of this invention. In the electric supercharger 103, the first bearing sleeve 25 and the first rubber sheet 21 of the electric supercharger 101 according to the first embodiment are replaced by third bearing sleeve 125 and an 0-ring 71 shown in Fig. 3. Note that identical numerals to the reference numerals used in Fig. 1 denote identical or similar constituent elements, and detailed description thereof has been omitted.

In the electric supercharger 103, the third bearing sleeve 125 is attached fixedly by bolts (not shown) to the inner wall 13b of the motor case 13 in order to support the first bearing 23. The third bearing sleeve 125 includes a cylindrical portion 125a extending in the axial direction X, and a flange portion 125b formed integrally with an X axis positive direction X1 side end portion of the cylindrical portion 125a. The first bearing 23 is supported by an inner peripheral surface of the cylindrical portion 125a of the third bearing sleeve 125. Further, an annular groove 125d centering on the central axis CA is formed in an X axis positive direction X1 side bottom surface 125c of the flange portion 125b of the third bearing sleeve 125. The 0-ring 71 is fitted to the groove 125d so as to contact the inner wall 13b of the motor case 13. In other words, the 0-ring 71 is provided between the motor case 13 and the third bearing sleeve 125 in the axial direction X. Furthermore, since the 0-ring 71 is sandwiched between the inner wall 13b of the motor case 13 and the bottom surface 125c of the third bearing sleeve 125, the bottom surface 125c and the inner wall 13b are separated from each other. In other words, in a condition where the shaft 22 is not driven to rotate, a gap exists between the inner wall 13b of the motor case 13 and the bottom surface 125c of the third bearing sleeve 125 so that the inner wall 13b and the bottom surface 125c do not contact each other.

Here, the 0-ring 71 constitutes the elastic member.

Hence, in the electric supercharger 103 according to the third embodiment, the 0-ring 71 is provided between the motor case 13 and the third bearing sleeve 125 in the axial direction X, and therefore the vibration of the shaft 22 is reduced. Moreover, a damper does not have to be provided on the radial direction outer side of the third bearing sleeve 125, and therefore an offset load is prevented from acting on the first bearing 23 and the second bearing 24.

Furthermore, in the electric supercharger 103, the 0-ring 71 is fitted to the groove 125d formed in the bottom surface 125c of the third bearing sleeve 125, and therefore the 0-ring 71 is incorporated between the motor case 13 and the third bearing sleeve 125 in the axial direction X. As a result, the 0-ring 71 can be incorporated by means of a simpler processing method than the conventional processing method of forming a groove in the inner peripheral surface side of the housing opposite the outer peripheral surface of the bearing sleeve.

Further, since the 0-ring 71 is sandwiched between the inner wall 13b of the motor case 13 and the bottom surface 125c of the third bearing sleeve 125, a gap exists between the inner wall 13b and the bottom surface 125c. As a result, the function of the 0-ring 71 for damping the vibration of the shaft 22 is improved. Moreover, the vibration of the shaft 22 is less likely to be transmitted to the housing 10, and therefore vibration in the electric supercharger 103 can be reduced even further.

Note that in the third embodiment, an 0-ring may be provided between the second bearing sleeve 26 and the lid body 50 instead of the second rubber sheet 29.

Further, an annular groove centering on the central axis CA may be formed in the inner wall 13b of the motor case 13, and the 0-ring 71 may be attached to this groove.

Furthermore, in the first to third embodiments, the elastic member is not limited to being provided in a pair on the X axis positive direction X1 side and the X axis negative direction X2 side of the electric motor 30, and may be provided singly in either one of these locations.

### Reference Signs List

- 10: Housing
- 21: First rubber sheet (elastic member, rubber sheet)
- 22: Shaft (rotary shaft)
- 23: First bearing (bearing)
- 24: Second bearing (bearing)
- 25: First bearing sleeve (bearing sleeve)
- 26: Second bearing sleeve (bearing sleeve)
- 29: Second rubber sheet (elastic member, rubber sheet)
- 40: Impeller
- 61: Third rubber sheet (elastic member, rubber sheet)
- 71: 0-ring (elastic member)
- 101, 102, 103: Electric supercharger
- 125: Third bearing sleeve (bearing sleeve)
- X: Axial direction

## Claims

1. An electric supercharger having an impeller that rotates in order to supercharge a fluid, comprising:
a housing;
a rotary shaft connected to the impeller;
a pair of bearings that support the rotary shaft so as to be capable of rotating relative to the housing;
a pair of bearing sleeves fixed to the housing in order to support the pair of bearings, respectively; and
an elastic member provided between the housing and at least one of the bearing sleeves in an axial direction of the rotary shaft.

2. The electric supercharger according to claim 1, wherein the elastic member is a rubber sheet, and
the rubber sheet cuts off contact between the bearing sleeve and the housing in the axial direction.

3. The electric supercharger according to claim 2, wherein concavo-convex irregularities are formed in a contact surface of the rubber sheet that contacts the bearing sleeve.

4. The electric supercharger according to claim 1, wherein the elastic member is an 0-ring.
